# EUROPEAN PATENT APPLICATION

(11) **EP 1 968 293 A1**
(43) Date of publication of application: **10.09.2008**
(21) Application number: 07817294.7
(22) Date of filing: 21.11.2007
(51) Int. Cl.: H04M 3/42

(54) **SPEECH RESPONSE METHOD AND SPEECH SERVER**

(30) Priority: 26.12.2006 CN 200610157787
(71) Applicant: Huawei Technologies Co., Ltd., Longgang District Shenzhen Guangdong 518129 (CN)
(72) Inventor: MENG, Yuetao, Shenzhen Guangdong 518129 (CN); YU, Zhou, Shenzhen Guangdong 518129 (CN); CHEN, Keping, Shenzhen Guangdong 518129 (CN)
(74) Representative: Hengelhaupt, Jürgen
(86) International application number: PCT/CN2007/071104
(87) International publication number: WO 2008/077336

(57) **Abstract**

A voice response method and a voice server. The method comprises: obtaining a voice service request and transforming the voice service request to a text service request; obtaining corresponding voice response data and visual response data according to the text service request; transmitting the voice response data and visual response data. The man-machine interactive interface according to embodiments of the present invention is more friendly and harmonious due to combination of voices and visual response data; interaction effects may be obtained via visual interface even when the prompt tones are not recognizable; voice interruption is allowed to respond to the result before the prompt tones are finished, thereby improving the speed and efficiency of the voice interaction; moreover, it can be avoided to repeatedly play the prompt tones when a user does not understand or hear the prompt tones.

## Description

This application claims priority to Chinese Application No. 200610157787.8 filed on December 26, 2006 and titled "VOICE SERVER AND VOICE ANSWER METHOD", which is incorporated in its entirety by reference.

### Field of the Invention

The present invention relates to communication field, and particularly to a method for voice response and a voice server.

### Background of the Invention

The development of voice recognition technology and the arrival of Voice Over IP, VoIP, together with the newly emerged advanced "voice server" (in contrast with keystroke-style menu selection), promote all automatic Interactive Voice Response ,IVR, ) applications. A user may implement end-to-end service with an enterprise or operator through such applications. For example, when a customer calls a service hotline of a consumption household electrical appliances manufacturer and speaks "refrigerator", he/she will be connected to a relevant department, thereby greatly reducing the calling time. In the field of telecom value-added service such as Number Best Tone, the operator also provides user experience of voice recognition. In another application field of data entry, the voice technology is significantly advantageous over the keystroke-style IVR. For instance, some U.S. Airlines advocate all automatic systems recently for people to book a ticket through telephone. Such applications would be impossible with only the keystroke-style dial-up.

In the voice technologies, a user interacts with a system via acoustical organs and voices. An interface for this is known as a Voice User Interface, VUI, which should present a correct result for the first interaction so as to reduce the number of times of user confirmation and the number of times of returning from error at most.

The following example shows an interaction between a user and a flight information system:

System: Hello, thanks for calling "Blue Sky" Airlines. Our newest automatic system may help you to inquire about flight information you need. Do you know the flight number?

User: Sorry, I don't know.

System: Never mind, tell me the departure city of the flight, please.

User: Beijing.

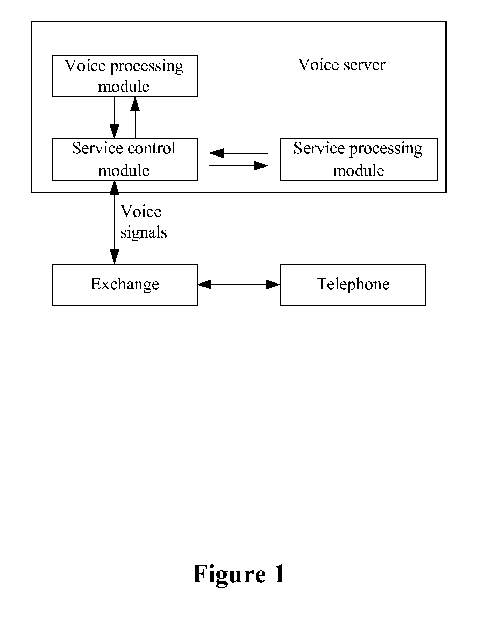

Referring to figure 1, an automatic IVR system includes a telephone, an exchange and a voice server. The voice server includes a service processing module, a service control module and a voice processing module. The service control module is connected to the exchange. The main operation flow of the IVR system is as follows:

A. a user dials a telephone number of the voice server via the telephone, and the exchange switches on a transmission channel between the telephone and the voice server;

B. the voice server plays salutatory or operation prompt. More specifically, the service control module obtains a text response from the service processing module, the service control module invokes a TTS (Text to Speech) technology of the voice processing module to transform the text response into speech, and the service control module sends the speech to the telephone via the exchange;

C. the user interacts with the voice server via voices, the service control module forwards the voices from the telephone to the voice processing module; the voice processing module performs ASR (Automatic Speech Recognition) and returns text to the service control module; the service control module forwards the text to the service processing module;

D. if the voices are recognized as text correctly, the service processing module implements the service and instructs the result to the user; if the voices are not recognized or ambiguous, the service processing module prompts the user to confirm the result or error;

E. the user continues to interact with the voice server via voices, or hangs up.

It can be seen that in the whole flow, the user inputs voice response and the voice server instructs result or requests the user's confirmation. However, when the voice server cannot recognize a voice or the recognized voice involves ambiguity, voice interactive tones are often used to request the user to confirm the ambiguity or initiate a new voice operation. In such a case, if the speed of playing the prompting voices is controlled to be too high, the tones should be difficult to be understood and are easy to be forgotten, while low playing speed should make the user lose patience. Further, in a noisy environment, noises also affect the audition of the user. Though the prompt tones may be played repeatedly, this intends to cause antipathy of the user.

So, the IVR system has the disadvantages of:

1. the poor interactive interface may slow down the voice interactive system because the user may continue to use the system only after hearing and understanding the prompts;

2. playing prompt tones repeatedly often causes antipathy of users.

### Summary of the Invention

Embodiments of the present invention are to provide a voice response method and a voice server for providing a visual interface while providing a voice recognition interactive interface.

To achieve the above object, solution employed in embodiments of the present invention is a voice response method including:

obtaining a voice service request, and transforming the voice service request into a text service request;

obtaining corresponding voice response data and visual response data according to the text service request; and

transmitting the voice response data and the visual response data.

To achieve the above object, solutions employed in embodiments of the present invention are a voice server including a service processing module, a service control module and a voice processing module;

the voice processing module is adapted to transform a received voice service request into a text service request;

the service processing module is adapted to obtain corresponding voice response data and visual response data according to the text service request; and

the service control module is adapted to transmit the voice response data and visual response data.

The beneficial effects of the embodiments of the present invention include: the man-machine interactive interface of the embodiments of the present invention is more friendly and harmonious because of the combination of voices and visual response data; the interaction effects may be obtained via the visual interface even when the prompt tones are not recognizable; user voice interruption is allowed to respond to the result even before the end of the prompt tones, so as to the speed up the voice interaction; repeatedly playing prompt tones is avoided when a user does not understand or hear the prompt tones.

### Brief Description of the Drawings

Figure 1 is a schematic diagram illustrating the structure of an automatic IVR system of the related art;

Figure 2 is a schematic diagram illustrating the structure of an automatic IVR system according to an embodiment of the present invention;

Figure 3 is a schematic diagram illustrating the flow of a voice response method according to an embodiment of the present invention; and

Figure 4 is a schematic diagram illustrating the flow of a voice response method according to SIP according to an embodiment of the present invention.

### Detailed Description of the Embodiments

Embodiments of the present invention will be illustrated with reference to the accompanying drawings.

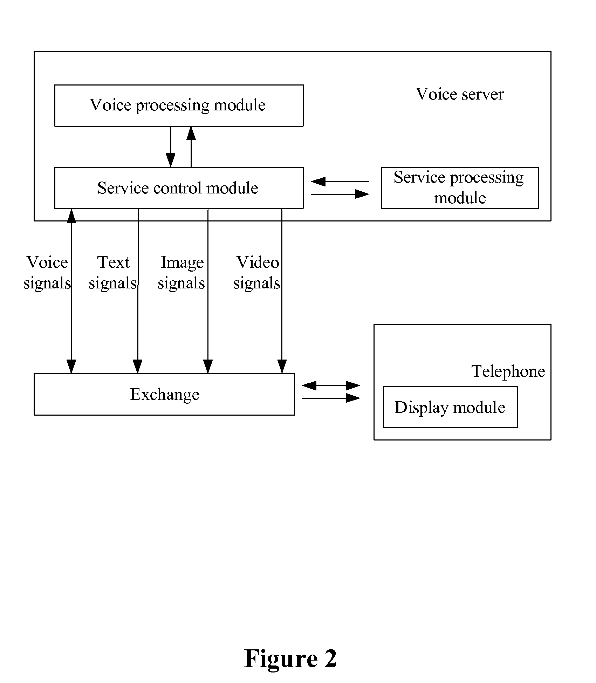

Referring to Figure 2, the IVR system according to an embodiment of the present invention includes a telephone, an exchange and a voice server; the voice server includes a service processing module, a service control module and a voice processing module. The service control module is connected to the exchange. The voice processing module is adapted to transform a received voice service request into a text service request. The voice service request may be obtained from the service control module or directly through an interface. Voice response data and visual response data (such as texts, images and streaming media) associated with the text service request are stored in the service processing module, and the service processing module obtains corresponding voice response data and visual response data according to the text service request. The service control module is connected to the service processing module, and is adapted to control the service processing module and return voice response data and visual response data obtained by the service processing module to the telephone via the exchange, so as to provide these data to the user. The telephone has a display module. Through a video communication channel, an audio communication channel and signaling, the voice server transmits texts, images or streaming media to the telephone while transmitting voices, and the telephone displays texts, images or streaming media contents via the display module. The embodiments of the present invention make people see a synthetic face (a virtual compere) while listening to voices of a computer so that the man-machine interactive interface is more friendly and harmonious. In addition, in the voice server according to embodiments of the present invention, if the service processing module has text response data associated with a text service request, the voice server according to embodiments of the present invention also includes a transforming unit and a second voice processing module. The transforming unit may be an independent module or set in the service control module, and is adapted to transform text response data into images and/or media streams. The second voice processing module is adapted to transform text response data into voice response data, and it may be an independent module or set in the voice processing module. In this case, the service control module is adapted to control the service processing module to obtain text response data from the service processing module, and invoke TTS technology of the second voice processing module to transform the text response data into voice response data, as well as control the transforming unit to invoke the Text-to-Visual Speech ,TTVS, technology to transform text response data into images or streaming media.

The telephone voice system according to embodiments of the present invention provides accessorial texts, a graphic visual interface or video interface in addition to a voice interactive interface, so that the speed and efficiency of voice interaction are improved by combination of voices and visual information, and the man-machine interactive interface is more friendly and harmonious.

Embodiments of the present invention have no limit on transport networks and protocols, so texts, images and streaming media may be transferred through Public Switched Telephone Network ,PSTN,, IP-based switch networks and IP-based protocols (such as SIP). The telephone in each embodiment of the present invention may be a VOIP telephone, a common old-style telephone POTS, an intelligent terminal, a mobile phone and so on.

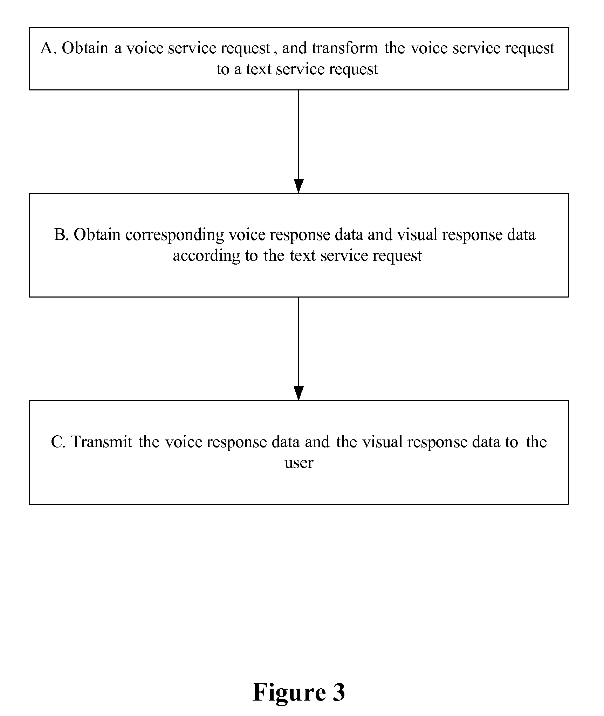

Referring to figure 3, the voice response method according to an embodiment of the present invention includes:

A. obtaining a voice service request of a user, and transforming the voice service request into a text service request;

B. obtaining corresponding voice response data and visual response data according to the text service request; obtaining the corresponding voice response data and/or visual response data directly according to the text service request if there is voice response data and/or visual response data associated with the text service request; obtaining the corresponding text response data according to the text service request if there is text response data associated with the text service request, and transforming the text response data into voice response data, images and/or streaming media;

C. transmitting the voice response data and visual response data to the user. The visual response data includes at least one type of text, image and streaming media. If the visual response data is text or an image, transmitting the text or the image to the user through signaling; if the visual response data are streaming media, establishing a streaming media communication channel and transmitting the streaming media to the user through the streaming media communication channel.

The method further includes determining the visual response data to be transmitted to the user which includes specifically: receiving information on service capability that the terminal supports reported by the user, and determining corresponding visual response data according to the information on service capability.

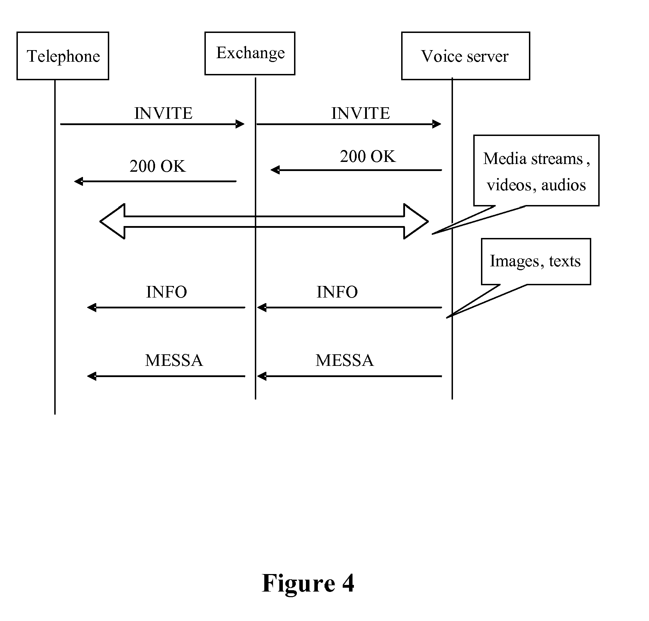

Referring to figure 4, a voice response method based on Session Initiation Protocol, SIP, according to an embodiment of the present invention includes the following processes:

A1. The telephone transmits an INVITE message to the voice server when a user dials the number, and the voice server returns a 2000K message. The INVITE message and 2000K message both carry an identifier indicating whether the telephone supports text messages, images or streaming media, and carries SDP (Session Description Protocol) for describing the media streaming;

B1. An audio communication channel is established between the telephone and the voice server after SDP negotiation on the INVITE and 2000K messages bearing SDP. If it is determined that the telephone supports text messages, texts are exchanged between the telephone and the voice server via signaling and voices are exchanged through the audio communication channel. If it is determined that the telephone supports streaming media, a video communication channel is established between the telephone and the voice server, and streaming media is exchanged through the video communication channel between the telephone and the voice server. If it is determined that the telephone supports image information, images are exchanged via signaling between the telephone and the voice server.

For example: a user dials 911, and the telephone transmits an INVITE message as follows:

INVITE SIP:911 SIP/2.0 // initiates a call to 911

Allow: MESSAGE, INFO,.... // the telephone supports MESSAGE, INFO messages

...

Content-Type: application/SDP // following are contents of the message, and the message contents conform to SDP

...

c = IN IP4 191.169.1.112 // the telephone intends to receive and transmit media data by IP address 191.169.1.112

m = audio 14380 RTP/AVP 0 96 97 98 // the port of the telephone for receiving/transmitting audio is 14380

a = rtpmap:0 PCMU // audio encoding method

...

m = video 3400 RTP/AVP 98 99 // the port of the telephone for receiving/transmitting video is 3400

a = ... // video encoding method (omitted)

The telephone transmits an INVITE message to the voice sever, indicating that it intends to establish a video channel and an audio channel, and informing the voice server that the telephone supports text messages (MESSAGE) and supports images (INFO). The telephone returns a 2000K message as follows:

SIP/2.0 2000K

...

Content-Type: application/SDP

m=audio 14380 RTP/AVP 0 96 97 98 // the port of the voice server for receiving/transmitting audio is 14380

a=rtpmap:0 PCMU // audio encoding method

....

m=video 3400 RTP/AVP 98 99 // the port of the voice server for receiving/transmitting video is 3400

A video and audio media stream is established after the voice server returns the 2000K message.

Allow: MESSAGE, INFO,... // supports MESSAGE, INFO messages

Through MESSAGE and INFO of an Allow field in the INVITE message, the voice server gets to know that the telephone accepts text messages and images; texts are sent via the MESSAGE and images are sent via the INFO.

The specific standards are as follows:

RFC3261 describes SIP protocol in detail

RFC3364 describes the session negotiation of SDP in detail

RFC3428 describes receiving and transmitting texts of MESSAGE in detail

RFC2976 describes INFO message in detail

In a PSTN network, the above functions may be implemented via H.320 protocol, and the specific details will not be given here.

In addition, the exchange in the IVR system according to embodiments of the present invention may be substituted with a software-switching device, a router etc.

According to embodiments of the present invention, those skilled in the art will understand that the present invention can be implemented with software and necessary hardware, or entirely with hardware, but in many cases, the former is preferred. Based on such understanding, the contribution of the solution of the invention to the prior art may be entirely or partially achieved by software, the software may be stored in a storage medium such as a ROM/RAM, a magnetic disk, an optical disk, the software includes instructions for making a computer device (personal computer, server or network device etc.) carry out the method of embodiments or parts of an embodiment of the present invention.

What described above are just preferred embodiments of the present invention and by no way to limit the scope of the present invention. Any modifications, alternations and improvements made within the spirit and principle of the present invention will fall into the scope of the invention as defined by the accompanying claims.

## Claims

1. A voice response method comprising:
obtaining a voice service request, and transforming the voice service request into a text service request;
obtaining corresponding voice response data and visual response data according to the text service request; and
transmitting the voice response data and visual response data.

2. The voice response method of claim 1 further comprising:
receiving service capability information; and
determining the visual response data according to the service capability information.

3. The voice response method of claim 1 or 2, wherein the visual response data comprises texts and/or images and/or streaming media.

4. The voice response method of claim 1, wherein obtaining corresponding voice response data and visual response data according to the text service request comprises:
obtaining corresponding text response data according to the text service request;
transforming the text response data into the voice response data.

5. The voice response method of claim 1, wherein obtaining corresponding voice response data and visual response data according to the text service request comprises:
obtaining corresponding text response data according to the text service request; and
transforming the text response data into the visual response data.

6. The voice response method of claim 3 further comprising:
in the case that the visual response data are texts or images, transmitting the texts or images via signaling;
in the case that the visual response data are streaming media, establishing a streaming media communication channel and transmitting the streaming media via the streaming media communication channel.

7. A voice server comprising a service processing module, a service control module and a voice processing module, wherein
the voice processing module is adapted to transform a received voice service request into a text service request;
the service processing module is adapted to obtain corresponding voice response data and visual response data according to the text service request; and
the service control module is adapted to transmit the voice response data and visual response data.

8. The voice server of claim 7, wherein voice response data and visual response data associated with the text service request are stored in the service processing module.

9. The voice server of claim 7, wherein text response data associated with the text service request are stored in the service processing module, and the voice server further comprises a second voice processing module adapted to transform the text response data into the voice response data.

10. The voice server of claim 7, wherein text response data associated with the text service request are stored in the service processing module, and the voice server further comprises a transforming unit adapted to transform the text response data into the visual response data.
